# EUROPÄISCHE PATENTSCHRIFT

(11) **EP 0 468 288 B1**
(45) Veröffentlichungstag und Bekanntmachung des Hinweises auf die Patenterteilung: **13.10.1993**
(21) Anmeldenummer: 91111535.0
(22) Anmeldetag: 11.07.1991
(51) Int. Cl.: B28B 11/04, C04B 41/85

(54) **Vorrichtung zum Engobieren oder Glasieren von Dachziegeln**
Apparatus for engobing or glazing of roofing tiles
Appareil d'engobage ou vitrage de tuiles de toit

(30) Priorität: 21.07.1990 DE 4023290
(43) Veröffentlichungstag der Anmeldung: 29.01.1992
(73) Patentinhaber: Hans Lingl Anlagenbau und Verfahrenstechnik GmbH & Co. KG, D-89231 Neu-Ulm (DE)
(72) Erfinder: Simon, Helmut, W-8908 Krumbach (DE); Brugger, Karl, W-7905 Dietenheim (DE)
(74) Vertreter: Körber, Wolfhart, Dr.rer.nat.

(56) Entgegenhaltungen:
- US-A- 2 264 499
- US-A- 2 358 258
- US-A- 2 978 350

## Beschreibung

Die Erfindung betrifft eine Vorrichtung zum Engobieren oder Glasieren von Dachziegeln, die auf einer keramischen Unterlage liegend gebrannt werden.

Dachziegel, die auf einer keramischen Unterlage liegend gebrannt werden, können auch auf dieser getrocknet werden. Es ist erwünscht, sie je nach keramischen und ästhetischen Anforderungen vor oder nach dem Trocknen zu engobieren oder zu glasieren. Dabei müssen die nach dem Dach-Decken sichtbaren Seitenkanten des Dachziegels wie auch die Oberfläche engobiert oder glasiert werden, da sonst ein unerwünschtes Streifenmuster entsteht.

Aus der DE-PS 38 17 231 ist ein Verfahren bekannt, Dachziegel, die auf einer keramischen Unterlage liegend getrocknet und gebrannt werden, während des Engobierens oder Glasierens mit einer Blende mit einem Ausschnitt zu überdecken, der kleiner ist als die Fläche des Dachziegels und den Dachziegel in der keramischen Unterlage auf ein mit Quarzsand oder Kaolin präpariertes Papier zu legen, um ein Kleben der Engobe oder der Glasur auf den keramischen Rähmchen zu verhindern.

Mit diesem Verfahren ist es nicht möglich, auch die schmalen Seitenkanten des Dachziegels zu engobieren oder zu glasieren; sie würden als Streifenmuster in der Farbe des Ziegelscherbens auf dem Dach sichtbar bleiben.

Aus der DE-AS 1584 530 ist ein Verfahren zum Engobieren von Dachziegeln bekannt, bei dem die Ziegel kontinuierlich unter einer Düseneinrichtung auf einer Förderbahn vorbeigeführt werden, wobei eine Düse über den mit Engobe zu besprühenden Dachziegeln schwingt. Schwingwinkel und Schwinggeschwindigkeit können so eingestellt werden, daß auch tiefe Rillen, Falze und Wölbungen an den Dachziegeln sowie auch tote Winkel einwandfrei bespritzt werden.

Nachteilig ist, daß dieses Verfahren mit auf keramischen Unterlagen liegenden Formlingen nicht durchgeführt werden kann, weil die Unterlage mit engobiert und verschmutzt würde, so daß die Ziegel beim Brennen auf der Unterlage festkleben.

Aufgabe der Erfindung ist es demnach, eine Vorrichtung zu schaffen, mit der auf keramischen Unterlagen liegende nasse oder trockene Dachziegel so engobiert oder glasiert werden können, daß auch die nach dem Dach-Decken sichtbaren schmalen Seitenkanten des Dachziegels engobiert oder glasiert sind, ohne daß die keramische Unterlage dabei beschmutzt wird.

Diese Aufgabe wird mit den Merkmalen des Anspruches 1 gelöst.

Die Vorteile der erfindungsgemäßen Vorrichtung bestehen darin, daß naß oder trocken auf Keramikrähmchen liegende Dachziegel an allen Sichtseiten einschließlich der schmalen Seitenkanten engobiert oder glasiert werden können, ohne dabei die keramische Unterlage zu beschmutzen.

Zwei Ausführungsbeispiele des Verfahrens und der Vorrichtung sind in der Zeichnung dargestellt und nachstehend näher erläutert. Es zeigen:

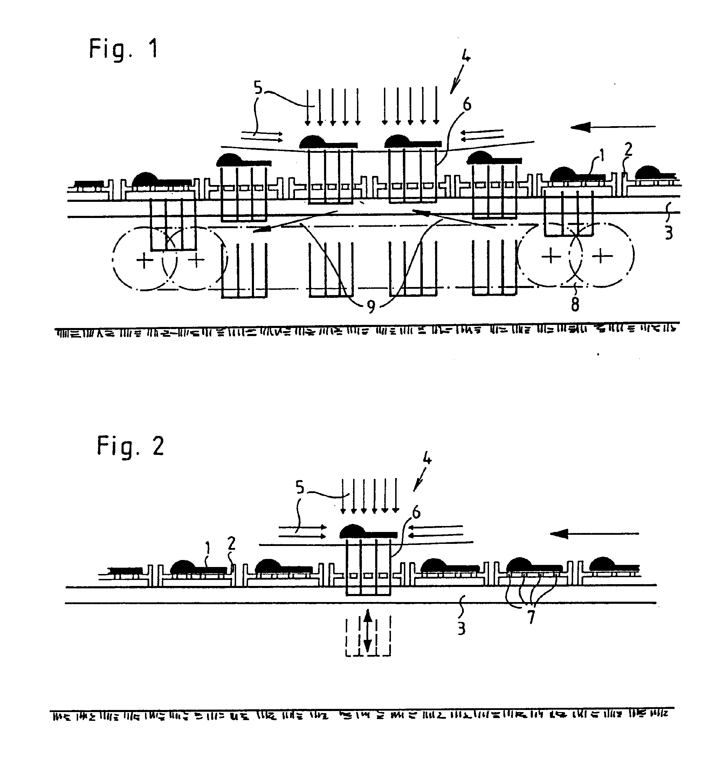

- Figur 1: die Seitenansicht einer verfahrensgemäßen Vorrichtung im kontinuierlichen Durchlaufbetrieb,
- Figur 2: eine verfahrensgemäße Vorrichtung für den Taktbetrieb.

Dachziegel 1 werden, auf Keramikrähmchen 2 liegend, auf einem Förderer 3 durch eine Engobier- oder Glasierstation 4 gefördert, in der Engobe- oder Glasurstrahlen 5 vertikal und horizontal auf den Dachziegel gerichtet sind. An der Engobier- oder Glasierstation 4 ist eine Einrichtung 6 vorgesehen, welche die Dachziegel 1 von ihren Rähmchen 2 abhebt und wieder auf diese absetzt. Die Engobier- oder Glasierstation 4 ist in bekannter Weise mindestens fünfseitig komplett und an der Unterseite so weit geschlossen, wie es die die Dachziegel während des Engobierens oder Glasierens unterstützende Einrichtung 6 zuläßt. Das Engobieren oder Glasieren kann mit verschieden bekannten Sprühmethoden erfolgen. Die Station 4 ist außerdem in bekannter Weise mit einer Absaugung versehen, um Verschmutzung außerhalb des Gehäuses zu vermeiden (Glasier- oder Engobierstation 4 nicht näher dargestellt).

Die Einrichtung 6 besteht aus mindestens einem durch Stifte gebildeten Rechen, in dem die Stifte so angeordnet sind, daß sie durch Aussparungen 7 der Rähmchen 2 hindurchgreifen können und mit ihren Enden das Profil der Unterseite der Dachziegel 1 kopieren.

Es können mehrere Rechen an einem stetig umlaufenden Kettentransporteur 8 mit Parallelführung (nicht dargestellt) sowie mit die Rechen anhebenden und absenkenden Rampen-Führungen 9 angeordnet werden, wobei die Rechenstifte im Umlauf durch die Keramikrähmchen 2 greifend, mit einem Dachziegel 1 in Eingriff gebracht werden, diesen vom Keramikrähmchen 2 abheben und durch die Engobier- oder Glasierstation 4 fördern und anschließend wieder auf das Keramikrähmchen 2 absetzen. Der Kettenförderer und der Rähmchenförderer haben gleiche Transportgeschwindigkeit.

Es ist auch möglich, den Förderer 3 taktweise zu betreiben und mit dem Rechen taktweise, durch die Keramikrähmchen 2 greifend, einen Dachziegel 1 in die Glasier- oder Engobierstation 4 zu heben, um ihn anschließend wieder auf das Keramikrähmchen 2 abzusetzen, das dann einen Schritt weitergefördert wird.

## Patentansprüche

1. Vorrichtung zum Engobieren oder Glasieren von Dachziegeln, welche, auf Aussparungen (7) aufweisenden Keramikrähmchen (2) ruhen, die mittels eines Förderers (3) durch die Engobier- oder Glasierstation (4) bewegbar sind, **dadurch gekennzeichnet**, daß an dieser Station (4) eine die Dachziegel (1) von ihren Rähmchen (2) abhebende bzw. auf diese wieder absetzende Einrichtung (6) vorgesehen ist, welche aus mindestens einem Heber besteht, der durch den Förderer (3) und die Aussparungen (7) der Rähmchen (2) hindurchgreift und die Dachziegel während des Engobierens oder Glasierens unterstützt.

2. Vorrichtung nach Anspruch 1,
**dadurch gekennzeichnet,** daß der Heber aus einem Rechen mit nach oben ragenden Stiften besteht.

3. Vorrichtung nach Anspruch, 1 oder 2,
**dadurch gekennzeichnet,** daß die Einrichtung (6) mehrere an einem stetig umlaufenden Kettenförderer (8) angebrachte Rechen enthält, wobei Kettenförderer (8) und Rähmchenförderer (3) aufeinander abgestimmte Transportgeschwindigkeit haben, und daß dem Kettenförderer (8) die Rechen nacheinander anhebende bzw. wieder absenkende Rampenführungen (9) zugeordnet sind.

4. Vorrichtung nach Anspruch 1 oder 2,
**dadurch gekennzeichnet,** daß die Einrichtung (6) einen stationär angeordneten Rechen enthält, der bei schrittweisen Betrieb des Rähmchenförderers (3) lotrecht auf- und abbewegbar ist.

## Claims

1. A device for slip coating or glazing roof tiles resting on small ceramic frames (2) which are provided with openings (7) and which can be moved through the slip coating or glazing station (4) by means of a conveyor (3), **characterized in that** at said station (4) means (6) are provided for lifting the roof tiles (1) from, and replacing them on, their frames (2), said means consisting of at least one lifter which extends through said conveyor (3) and said openings (7) of the frames (2) and supports the roof tiles during the slip coating or glazing operation.

2. A device as claimed in Claim 1, **characterized in that** said lifter consists of a rake with upwardly extending pins.

3. A device as claimed in Claim 1 or 2, **characterized in** **that** said means (6) include a plurality of rakes attached to a continuous chain conveyor (8) whose speed is matched to that of the frame conveyor (3) and that ramps (9) are associated with said chain conveyor (8) which successively lift and lower said rakes.

4. A device as claimed in Claim 1 or 2, **characterized in** **that** said means (6) include a stationary rake which can be perpendicularly moved up and down as said frame conveyor (3) is indexed from one position to another in the step-by-step mode of operation.

## Revendications

1. Dispositif d'engobage ou de glaçage de tuiles reposant sur des évidements (7) présentant de petits cadres en céramique (2) qui peuvent être déplacés à l'aide d'un convoyeur (3) à travers la station d'engobage ou de glaçage (4),
caractérisé en ce qu'est prévu, sur cette station (4), un système (6) détachant les tuiles (1) de leurs petits cadres (2) ou les déposant sur ceux-ci, système composé au minimum d'un releveur qui s'engage dans le convoyeur (3) et les évidements (7) des petits cadres (2) et soutient les tuiles durant l'engobage ou le glaçage.

2. Dispositif suivant la revendication n° 1,
caractérisé en ce que le releveur est composé d'un râteau doté d'ergots faisant saillie vers le haut.

3. Dispositif suivant la revendication n° 1 ou 2,
caractérisé en ce que le système (6) contient plusieurs râteaux disposés sur un convoyeur à chaîne (8) en constante rotation, le convoyeur à chaîne (8) et le convoyeur de petits cadres (3) ayant des vitesses de transport synchronisées et en ce que sont adjoints au convoyeur à chaîne (8) des guides de rampe (9) faisant monter ou descendre successivement les râteaux.

4. Dispositif suivant la revendication n° 1 ou 2,
caractérisé en ce que le système (6) contient un râteau fixe qui peut être déplacé verticalement vers le haut ou vers le bas alors que le convoyeur de petits cadres (3) fonctionne pas à pas.
